# EUROPÄISCHE PATENTSCHRIFT

(11) **EP 1 979 660 B1**
(45) Veröffentlichungstag und Bekanntmachung des Hinweises auf die Patenterteilung: **13.01.2010**
(21) Anmeldenummer: 07721856.8
(22) Anmeldetag: 23.01.2007
(51) Int. Cl.: F16K 41/06

(54) **SCHIEBERHAUBE**
GATE VALVE BONNET
CHAPEAU DE VANNE D'ARRÊT

(30) Priorität: 25.01.2006 DE 202006001106 U
(43) Veröffentlichungstag der Anmeldung: 15.10.2008
(73) Patentinhaber: Magwen Valves GmbH, 39171 Osterweddingen (DE); Wenig, Frank, 39116 Magdeburg (DE)
(72) Erfinder: WENIG, Frank, 39116 Magdeburg (DE)
(74) Vertreter: Fischer, Volker
(86) Internationale Anmeldenummer: PCT/DE2007/000121
(87) Internationale Veröffentlichungsnummer: WO 2007/085236

(56) Entgegenhaltungen:
- DD-A- 16 871
- DE-B1- 2 730 492
- US-A- 4 225 115

## Beschreibung

Die Erfindung betrifft eine Anordnung mit einer Schieberhaube für Schieber mit nach außen durch die Schieberhaube ragender Spindel zur Betätigung des die Durchgangsöffnung des Schiebers versperrenden Stellgliedes.

Schieberhauben weisen zur Durchführung der Spindel nach außen eine Öffnung auf, in die zur Lagerung, Fixierung und ggf. Sicherung der Spindel sowie zur Abdichtung des Innenraumes des Schiebergehäuses ein Spindelführungsteil sowie Sicherungs-, Gleit- und Dichtelemente eingebaut sind.
Bei bekannten Schieberhauben werden diese Bauteile gemeinsam mit der Spindel von innen in die Schieberhaube eingesetzt, eingepasst und montiert. Danach wird die Schieberhaube mit dem Schiebergehäuse verbunden. Das Einsetzen, Einpassen und Montieren der einzelnen Bauteile zur Lagerung, Fixierung, ggf. Sicherung und Abdichtung der Spindel ist aufwendig und verursacht daher erhebliche Kosten. Besonders aufwendig sind aufgrund der dazu zu fertigenden Gewinde Lösungen, bei denen Bauteile eingeschraubt werden.

Der Erfindung liegt das Problem zu Grunde, eine Anordnung mit einer Schieberhaube für Schieber zu entwickeln, in die die zur Lagerung und Fixierung und ggf. Sicherung der Spindel sowie zur Abdichtung des Innenraumes des Schiebergehäuses notwendigen Bauteile auf einfache Weise eingesetzt, eingepasst und montiert werden können, wobei komplizierte und aufwendige Fertigungsarbeiten vermieden werden sollen.

Dieses Problem wird mit einer Anordnung mit einer Schieberhaube für Schieber gemäß den Merkmalen des 1. Patentanspruches gelöst.

Eine bevorzugte Ausführung der Erfindung wird in Anspruch 2 beschrieben. Das elastische Element zur Fixierung der in die Spindelöffnung zur Lagerung und Fixierung und ggf. Sicherung der Spindel eingesetzten Teile ist bei dieser Ausführung der Erfindung als eine die Spindelöffnung abdeckende, eine Durchgangsöffnung für die Spindel aufweisende elastische Kappe ausgeführt. An der zur Schieberhaube weisenden, gegenüber der Durchgangsöffnung für die Spindel liegenden Öffnung der Kappe ist ein nach innen weisender umlaufender Bord angeordnet, der zur Montage der aus elastischem Material, bevorzugt aus federeleastischem Edelstahl, gefertigten Kappe in eine um die Spindelöffnung der Schieberhaube eingearbeitete umlaufende Nut eingreift. Die Form der elastischen Kappe weist oberhalb des Bordes nach innen weisende Sicken oder Kröpfungen auf, die im montierten Zustand auf dem Spindelführungsteil aufliegen und dieses unter federelastischer Spannung der Kappe in die Spindelöffnung der Schieberhaube drücken, wodurch ggf. in Wirkverbindung mit weiteren Teilen die Lagerung und Fixierung und Sicherung der Spindel bewirkt wird.

Zur Erleichterung der Montage der elastischen Kappe auf die Schieberhaube kann das Spindelführungsteil einen auf dem Rand der Spindelöffnung der Schieberhaube aufliegenden Kragen aufweisen, der nach außen hin kegelstumpfförmig ausgeführt ist. Der Bord der elastischen Kappe kann bei der Montage über die Kegelstumpffläche gleiten und so in die umlaufende Nut der Schieberhaube gelangen.

Es kann zweckmäßig sein, zur Fixierung und Sicherung der Spindel gegen Bewegungen in längsaxialer Richtung bzw. zur Aufnahme von Plungerkräften oberhalb des Spindelbundes eine Ringscheibe vorzusehen, die einerseits längsaxial an der Schieberhaube und anderseits längsaxial am Spindelbund anliegt. Die Ringscheibe verhindert so eine längsaxiale Bewegung der Spindel nach außen, indem sie eine Abstützung des Spindelbundes gegenüber der Schieberhaube bewirkt. Die Ringscheibe ist bevorzugt zweigeteilt ausgeführt, um ein Einsetzen der Ringscheibe in die Spindelöffnung auf einfache Weise zu ermöglichen. Die Teile der Ringscheibe werden zur Montage in die Spindelöffnung auf den Spindelbund aufgelegt, radial nach außen geschoben, bis sie an dem zur Abstützung vorgesehenen Bereich der Schieberhaube anliegen und in dieser Position durch ein Formelement gegen Verrutschen gesichert. Das Formelement kann separat ausgeführt sein, es kann aber auch beispielsweise vom Spindelführungsteil gebildet werden.

Eine andere bevorzugte Ausführung der Erfindung wird in Anspruch 7 beschrieben. Hierbei bildet das Spindelführungsteil das elastische Element, durch welches eine Fixierung des Spindelführungsteiles selbst sowie der Gleit-, Sicherungs- und Dichtelemente bewirkt wird. Das das elastische Element bildende Spindelführungsteil weist einen radial nach innen weisender Bund auf, der günstigerweise am oberen Ende des Spindelführungsteiles angeordnet ist und im montierten Zustand in eine in die Spindel eingearbeitete Nut eingreift. Das Spindelführungsteil ist dadurch in seiner längsaxialen Lage gegenüber der Spindel fixiert und gegen längsaxiale Bewegungen gegenüber der Spindel gesichert. Die Fixierung und Sicherung der Spindel in längsaxialer Richtung gegenüber der Schieberhaube erfolgt bei dieser Ausführung der Erfindung wie bereits beschrieben durch eine Ringscheibe, die den Spindelbund in längsaxialer Richtung gegenüber der Schieberhaube abstützt.

Das das elstische Element bildende Spindelführungsteil ist aus elastischem Material gefertigt und unter radial wirkender elastischer Spannung in die Spindelöffnung eingepasst. Es kann innen und außen konzentrische Dichtlippen aufweisen, die am Spindelschaft und an der Innenfläche der Spindelöffnung anliegen. Die infolge der elastischen Spannung des Spindelführungsteiles radial wirkenden Kräfte tragen zur Lagefixierung des Spindelführungsteiles in längsaxialer Richtung sowohl gegenüber der Spindel als auch gegenüber der Schieberhaube bei.

Es kann vorteilhaft sein, ein PTFE-Formteil in der Spindelöffnung der Schieberhaube anzuordnen, welches zum einen die Spindel in der Spindelöffnung zentriert und zum anderen die Funktion einer Gleitscheibe übernimmt.

Weiterhin kann es vorteilhaft sein, oberhalb des Spindelführungsteiles einen in eine in die Spindel eingearbeitete Nut eingreifenden Seegerring anzuordnen, um so eine ggf. zusätzliche Lagefixierung des Spindelführungsteiles in längsaxialer Richtung gegenüber der Spindel zu bewirken.

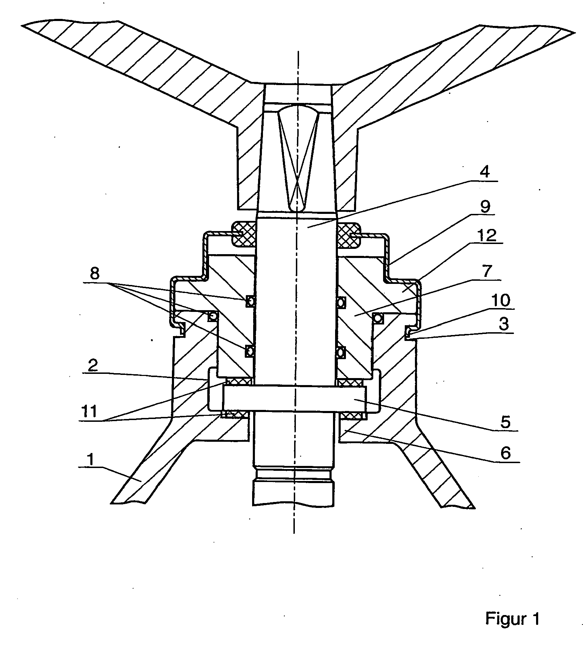

Die Erfindung soll nachfolgend anhand von vier Ausführungsbeispielen, die in den zugehörigen Zeichnungen Figur 1 bis 5 veranschaulicht sind, weiter erläutert werden.
Die Figuren zeigen den die Spindelöffnung aufweisenden Teil einer Schieberhaube mit der erfindungsgemäßen Anordnung der Elemente zur Lagerung und Fixierung und ggf. Sicherung der Spindel sowie zur Abdichtung des Schiebergehäuses.
Im Einzelnen sind in allen vier Ausführungsbeispielen mit gleichen Bezugszeichen versehen dargestellt: Eine Schieberhaube 1 mit einer Spindelöffnung 2 und einer durch die Spindelöffnung 2 der Schieberhaube 1 hindurchragende Spindel 4, die zur längsaxialen Lagerung und Fixierung einen Spindelbund 5 aufweist, ein Spindelführungsteil 9 sowie Gleitelemente 11.

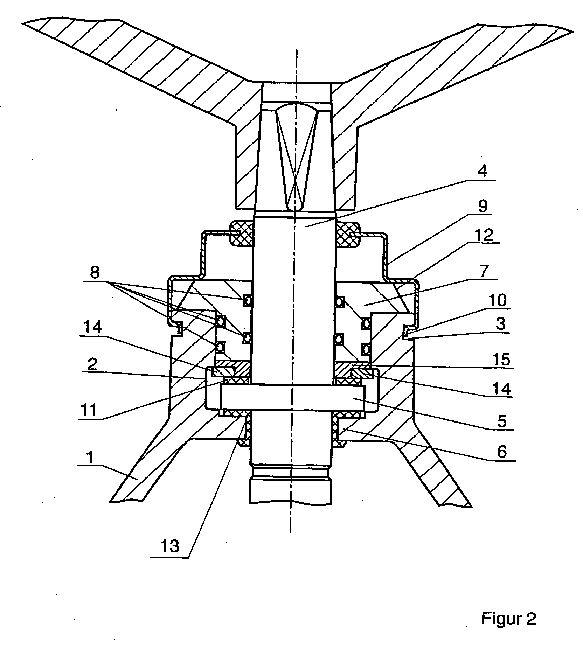

In den Figuren 1 und 2 sind zwei Varianten der eine elastische Kappe 9 aufweisenden Ausführung der Erfindung dargestellt.
Figur 1 zeigt eine innerhalb der Spindelöffnung 2 angeordnete Spindel 4, deren Spindelbund 5 auf einem nach innen ragenden Bund 6 der Schieberhaube 1 aufliegt. Zwischen dem Spindelbund 5 und dem Bund 6 der Schieberhaube 1 ist eine Gleitscheibe 11 angeordnet. Das Spindelführungsteil 7 liegt mit seiner Unterseite auf dem Spindelbund 5 auf, wobei sich zwischen dem Spindelführungsteil 7 und dem Spindelbund 5 eine Gleitscheibe 11 befindet. Das Spindelführungsteil 7 weist einen auf der Oberseite der Spindelöffnung 2 aufliegenden Kragen 12 auf. Das Spindelführungsteil 7 ist durch eine elastische Kappe 9 in längsaxialer Richtung lagefixiert. Die elastische Kappe 9 weist in ihrem Seitenteil eine Kröpfung und an ihrer unteren Öffnung einen nach innen gerichteten Bord 10 auf. Im montierten Zustand der elastischen Kappe 9 liegt der gekröpfte Bereich der Kappe 9 auf dem Kragen 12 des Spindelführungsteiles 7 auf, während der Bord 10 in eine außen um die Spindelöffnung 2 in die Schieberhaube 1 eingebrachte Nut 3 eingreift. Zur Abdichtung des Innenraumes des Schiebergehäuses sind zwischen dem Spindelführungsteil 7 und der Spindel 4 sowie dem Spindelführungsteil 7 und der Spindelöffnung 2 der Schieberhaube 1 Dichtringe 8 angeordnet.
Zur Montage der in Figur 1 gezeigten Ausführung der Erfindung werden zunächst eine Gleitscheibe 11, danach die Spindel 4, eine weitere Gleitscheibe 11 und dann das Spindelführungsteil 7 wie dargestellt in die Spindelöffnung 2 der Schieberhaube 1 eingesetzt und eingepasst. Danach wird die elastische Kappe 9 über das Spindelführungsteil 7 gestülpt und soweit in Richtung Schieberhaube 1 gedrückt, bis der Bord 10 unter mechanischer Spannung in die Nut 3 einrastet.

Bei der in Figur 2 dargestellten Weiterbildung dieser Ausführung der Erfindung ist der Kragen 12 des Spindelführungsteiles 7 kegelstumpfförmig ausgeführt, wodurch die Montage der elastischen Kappe 9 durch Überstülpen der elastischen Kappe 9 über das Spindelführungsteil 7 und Einrasten des Bordes 10 der elastischen Kappe 9 in die Nut 3 wesentlich erleichtert wird.
Die in Figur 2 dargestellte Weiterbildung der Erfindung zeigt außerdem eine oberhalb des Spindelbundes 5 angeordnete zweigeteilte Ringscheibe 14. Die zweigeteilte Ringscheibe 14 ist so angeordnet, dass sie einerseits mit ihrer Oberseite an einem ausgeformten Vorsprung innerhalb der Spindelöffnung 2 der Schieberhaube 1 anliegt und andererseits mit Ihrer Unterseite vermittelt durch eine Gleitscheibe 11 auf dem Spindelbund 5 aufliegt. Die zweigeteilte Ringscheibe 14 wird durch ein Formelement 15 lagefixiert gehalten. Das Einsetzen der zweigeteilten Ringscheibe 14 erfolgt wie bereits in der Erfindungsbeschreibung beschrieben.

Ferner zeigt die in Figur 2 dargestellte Weiterbildung der Erfindung ein in der Spindelbohrung 2 angeordnetes, den Bund 6 der Schieberhaube 1 teilweise umgreifendes Formteil 13. Das Formteil 13 ist aus PTFE gefertigt und bewirkt eine radiale Justierung der Spindel 4. Es fungiert gleichzeitig als Gleitscheibe 11.

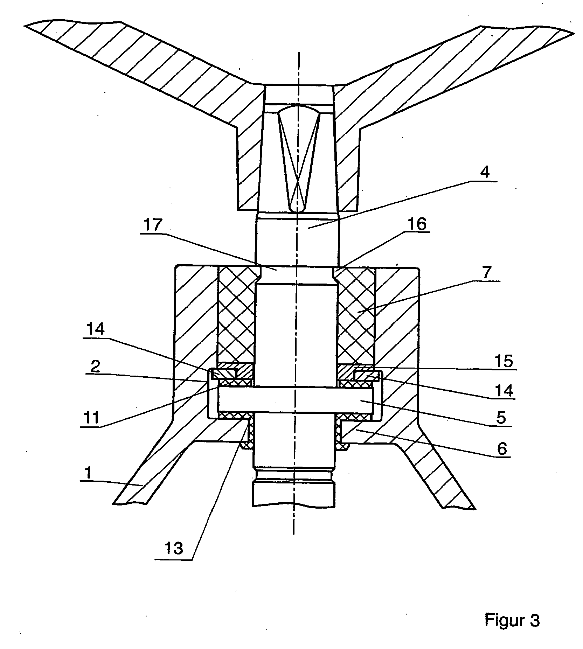

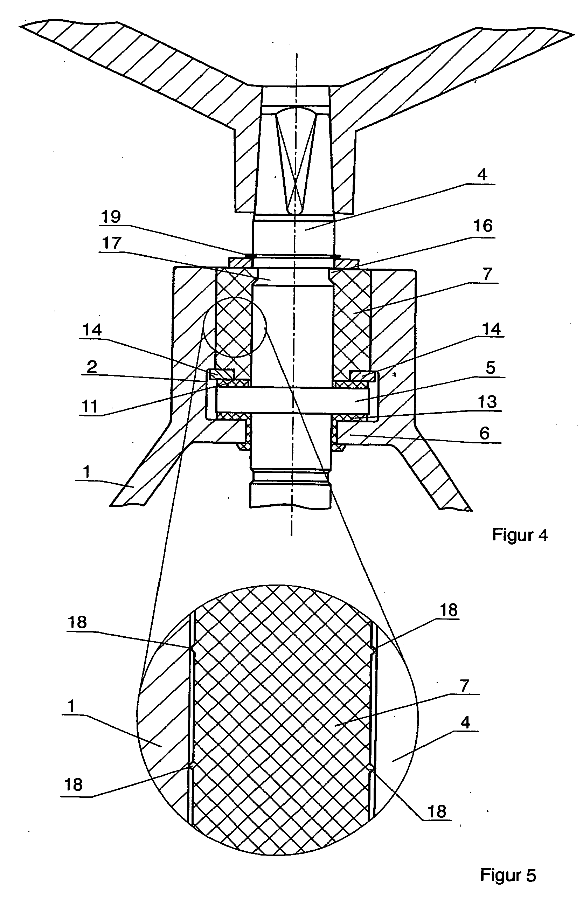

Die Figuren 3 bis 5 veranschaulichen eine zweite bevorzugte Ausführung der Erfindung, bei der das Spindelführungsteil 7 das elastische Element bildet, mittels dessen in Wirkverbindung mit anderen Mitteln die Fixierung und Sicherung der Lage der Spindel 4 in der Spindelbohrung 2 bewirkt wird.
Das Spindelführungsteil 7 ist bei der dargestellten Ausführung vollständig aus elastischem Material gefertigt. Es weist an seinem oberen Ende einen radial nach innen ragenden Bund 16 auf, der im montierten Zustand in eine in der Spindel 4 angeordneten Nut 17 eingreift. Die dargestellte Ausführung der Erfindung umfasst weiter eine oberhalb des Spindelbundes 5 angeordnete zweigeteilte Ringscheibe 14, die wie bereits beschrieben angeordnet ist und wie in Figur 3 dargestellt, durch ein Formelement 15 oder wie in Figur 4 gezeigt, durch das Spindelführungsteil 7, das im unteren Teil entsprechend dem Formelement 15 geformt ist, lagefixiert ist. Das Spindelführungsteil 7 kann innen und/oder außen radial verlaufende Dichtlippen 18 aufweisen, wie in Figur 5 dargestellt. Die Dichtlippen 18 bewirken die Abdichtung des Innenraumes des Schiebergehäuses.
Zur Montage der in den Figuren 3 und 4 gezeigten Ausführung der Erfindung wird zunächst das Formteil 13 den Bund 6 des Spindelgehäuses 1 teilweise umgreifend in die Spindelöffnung eingesetzt. Danach wird die Spindel 4 eingesetzt und eine Gleitscheibe 11 auf den Spindelbund 5 aufgelegt. Anschließend werden die beiden Teile der geteilten Ringscheibe 14 auf den Spindelbund aufgelegt und radial nach außen geschoben, bis sie an dem zur Abstützung vorgesehenen Vorsprung in der Spindelöffnung 2 der Schieberhaube 1 anliegen. Nachfolgend wird entweder das Formelement 15 eingesetzt und eingepasst, um die beiden Teile der Ringscheibe 14 in der vorbestimmten Position zu fixieren und gegen Verrutschen zu sichern oder es wird sogleich das Spindelführungsteil 7 mit seiner Öffnung von oben über die Spindel 4 geschoben und soweit in Richtung Schieberhaube 1 gedrückt, bis es unter elastischer Spannung in die Spindelöffnung 2 der Schieberhaube 1 eingedrückt ist und der nach innen weisende Bund 16 des Spindelführungsteiles 7 in die in der Spindel befindlichen Nut 17 eingreift. Bei der in Figur 4 dargestellten Ausbildung der Erfindung ist beim Einsetzen und Eindrücken des Spindelführungsteiles 7 sicherzustellen, dass die zweigeteilte Ringscheibe in der vorbestimmten Position verbleibt, damit der dem Formelement 15 entsprechende untere Teil des Spindelführungsteiles 7 die beiden Teile der Ringscheibe 14 in der vorbestimmten Position fixiert und gegen Verrutschen sichert.
Oberhalb des Spindelführungsteiles 7 ist ein Sägerring 19 angeordnet, der in eine in die Spindel 4 eingearbeitete Nut eingreift und das Spindelführungsteil 7 zusätzlich gegen Verrutschen in längsaxialer Richtung sichert.

## Patentansprüche

1. Anordnung mit:
- einer Schieberhaube für Schieber,
- einer Spindel (4),
- Spindelführungsteil (7), Gleitelement (11) und Dichtelement (8, 18),
wobei:
- die Schieberhaube (1) eine Spindelöffnung (2) mit einem nach innen ragenden Bund (6) aufweist,
- die aus der Schieberhaube (1) ragende Spindel (4) einen Spindelbund (5) aufweist,
- Spindelführungsteil (7), Gleitelement (11) und Dichtelement (8, 18) in der Spindelöffnung (2) auf jener Seite des Bundes (6) der Schieberhaube (1) angeordnet sind, die - im eingebauten Zustand der Anordnung - dem Innenraum eines Schiebergehäuses abgewandt ist,
- der Spindelbund (5) der Spindel (4) zwischen dem nach innen ragenden Bund (6) der Schieberhaube (1) und dem Spindelführungsteil (7) positioniert ist, und
- oberhalb des Spindelbundes (5) eine parallel dazu verlaufende Nut (3, 17) sowie ein einen Bord (10) oder einen Bund (16) aufweisendes elastisches Element (7, 9) angeordnet sind und der Bord (10) oder der Bund (16) des elastischen Elementes (7, 9) in die Nut (3, 17) eingreift.

2. Anordnung nach Anspruch 1,
**dadurch gekennzeichnet,**
**dass** das elastische Element (9) als eine die Spindelöffnung (2) abdeckende, eine Durchgangsöffnung für die Spindel (4) aufweisende elastische Kappe (9) ausgeführt ist.

3. Anordnung nach Anspruch 2,
**dadurch gekennzeichnet,**
**dass** die elastische Kappe (9) den nach innen weisenden Bord (10) aufweist, der in die um die Spindelöffnung (2) in die Schieberhaube (1) eingearbeitete Nut (3) eingreift.

4. Anordnung nach Anspruch 2 oder 3,
**dadurch gekennzeichnet,**
**dass** das Spindelführungsteil (7) mit einem kegelstumpfförmig ausgeführten Kragen (12) versehen ist, der auf dem Rand der Spindelöffnung (2) der Schieberhaube (1) aufliegt.

5. Anordnung nach einem der Ansprüche 2 bis 4,
**dadurch gekennzeichnet,**
**dass** eine geteilte Ringscheibe (14) zur längsaxialen Sicherung und zur Aufnahme der Plungerkräfte der Spindel (4) sich in längsaxialer Richtung gegen die Schieberhaube (1) abstützend in der Spindelöffnung (2) angeordnet ist.

6. Anordnung nach Anspruch 5,
**dadurch gekennzeichnet,**
**dass** die Ringscheibenteile der geteilten Ringscheibe (14) durch ein Formelement (15) oder durch das Spindelführungsteil (7) gegen Verrutschen gesichert sind.

7. Anordnung nach Anspruch 1,
**dadurch gekennzeichnet,**
**dass** das Spindelführungsteil (7) das elastische Element bildet und den radial nach innen ragenden Bund (16) aufweist, der in die in die Spindel (4) eingearbeitete Nut (17) eingreift.

8. Anordnung nach Anspruch 7,
**dadurch gekennzeichnet,**
**dass** das Spindelführungsteil (7) Dichtlippen (18) zur Dichtung gegenüber der Spindel (4) und/oder der Spindelöffnung (2) aufweist.

9. Anordnung nach einem der vorgenannten Ansprüche,
**dadurch gekennzeichnet,**
**dass** ein den nach innen ragenden Bund (6) der Schieberhaube (1) umgreifendes, den Zwischenraum zwischen dem Bund (6) und der Spindel (4) ausfüllendes PTFE-Formteil (13) angeordnet ist.

10. Anordnung nach einem der vorgenannten Ansprüche,
**dadurch gekennzeichnet,**
**dass** oberhalb des Spindelführungsteils (7) ein in eine in die Spindel (4) eingearbeitete Nut eingreifender Seegerring (19) angeordnet ist.

## Claims

1. Arrangement comprising:
- a gate valve bonnet for gate valves,
- a spindle (4),
- spindle guide part (7), sliding element (11) and sealing element (8, 18),
wherein
- the gate valve bonnet (1) has a spindle opening (2) having a shoulder (6) projecting inwards,
- the spindle (4) projecting from the gate valve bonnet (1) has a spindle shoulder (5)
- spindle guide part (7), sliding element (11) and sealing element (8, 18) are arranged in the spindle opening (2) on that side of the shoulder (6) of the gate valve bonnet (1) which - in the fitted state of the arrangement - faces away from the interior space of a gate valve casing,
- the spindle shoulder (5) of the spindle (4) is positioned between the inwardly projecting shoulder (6) of the gate valve bonnet (1) and the spindle guide part (7), and
- a groove (3, 17) running parallel to the spindle shoulder (5) and an elastic element (7, 9) having a flange (10) or a shoulder (16) are arranged above said spindle shoulder (5), and the flange (10) or the shoulder (16) of the elastic element (7, 9) engages in the groove (3, 17).

2. Arrangement according to Claim 1, **characterized in that** the elastic element (9) is designed as an elastic cap (9) covering the spindle opening (2) and having a through-opening for the spindle (4).

3. Arrangement according to Claim 2, **characterized in that** the elastic cap (9) has the flange (10) which projects inwards and which engages in the groove (3) incorporated in the gate valve bonnet (1) around the spindle opening (2).

4. Arrangement according to Claim 2 or 3, **characterized in that** the spindle guide part (7) is provided with a frustoconical collar (12) which rests on the rim of the spindle opening (2) of the gate valve bonnet (1).

5. Arrangement according to one of Claims 2 to 4, **characterized in that** a split annular disc (14) for the longitudinal axial securing and for absorbing the plunger forces of the spindle (4) is arranged in the spindle opening (2) in a supporting manner in the longitudinal axial direction against the gate valve bonnet (1).

6. Arrangement according to Claim 5, **characterized in that** the annular disc parts of the split annular disc (14) are secured against slipping by a moulded element (15) or by the spindle guide part (7).

7. Arrangement according to Claim 1, **characterized in that** the spindle guide part (7) forms the elastic element and has the shoulder (16) which projects radially inwards and which engages in the groove (17) incorporated in the spindle (4).

8. Arrangement according to Claim 7, **characterized in that** the spindle guide part (7) has sealing lips (18) for sealing relative to the spindle (4) and/or the spindle opening (2).

9. Arrangement according to one of the aforesaid claims, **characterized in that** a PTFE moulded part (13) is arranged which encloses the inwardly projecting shoulder (6) of the gate valve bonnet (1) and fills the space between the shoulder (6) and the spindle (4).

10. Arrangement according to one of the aforesaid claims, **characterized in that** a Seeger circlip ring (19) engaging in a groove incorporated in the spindle (4) is arranged above the spindle guide part (7).

## Revendications

1. Agencement comprenant :
- un chapeau pour vanne d'arrêt,
- une broche (4),
- une pièce (7) de guidage de ladite broche, un élément de glissement (11) et un élément d'étanchement (8, 18),
sachant que :
- le chapeau (1) de vanne d'arrêt présente un orifice (2) de passage de la broche, muni d'une collerette (6) saillant vers l'intérieur,
- ladite broche (4), faisant saillie au-delà dudit chapeau (1), est dotée d'un collet (5),
- la pièce (7) de guidage de la broche, l'élément de glissement (11) et l'élément d'étanchement (8, 18) sont disposés, dans l'orifice (2) de passage de la broche, du côté de la collerette (6) du chapeau (1) qui - à l'état intégré de l'agencement - est tourné à l'opposé de l'espace interne d'un carter de vanne d'arrêt,
- le collet (5) de la broche (4) est interposé entre la pièce (7) de guidage de la broche et la collerette (6) du chapeau (1) qui fait saillie vers l'intérieur, et
- une rainure (3, 17) s'étendant parallèlement au collet (5) de la broche, ainsi qu'un élément élastique (7, 9) pourvu d'un rebord (10) ou d'un épaulement (16), se trouvent au-dessus dudit collet de la broche, et ledit rebord (10) ou ledit épaulement (16) dudit élément élastique (7, 9) pénètre dans ladite rainure (3, 17).

2. Agencement selon la revendication 1,
**caractérisé par le fait**
**que** l'élément élastique (9) est réalisé sous la forme d'une coiffe élastique (9) recouvrant l'orifice (2) de passage de la broche et présentant un orifice de traversée destiné à ladite broche (4).

3. Agencement selon la revendication 2,
**caractérisé par le fait**
**que** la coiffe élastique (9) offre le rebord (10) pointant vers l'intérieur et pénétrant dans la rainure (3) pratiquée dans le chapeau (1) de vanne d'arrêt, autour de l'orifice (2) de passage de la broche.

4. Agencement selon la revendication 2 ou 3,
**caractérisé par le fait**
**que** la pièce (7) de guidage de la broche est dotée d'une aile saillante (12) de réalisation tronconique, reposant sur le bord de l'orifice (2) du chapeau (1) de vanne d'arrêt qui permet le passage de la broche.

5. Agencement selon l'une des revendications 2 à 4,
**caractérisé par le fait**
**qu'**un disque annulaire scindé (14), destiné à l'arrêt longitudinal axial et à l'absorption des forces translatoires de la broche (4), est logé dans l'orifice (2) de passage de ladite broche en prenant axialement appui, dans le sens longitudinal, contre le chapeau (1) de vanne d'arrêt.

6. Agencement selon la revendication 5,
**caractérisé par le fait**
**que** les parties du disque annulaire scindé (14) sont empêchées de riper grâce à un élément profilé (15) ou à la pièce (7) de guidage de la broche.

7. Agencement selon la revendication 1,
**caractérisé par le fait**
**que** la pièce (7) de guidage de la broche matérialise l'élément élastique et offre l'épaulement (16) qui fait saillie vers l'intérieur, et pénètre dans la rainure (17) pratiquée dans ladite broche (4).

8. Agencement selon la revendication 7,
**caractérisé par le fait**
**que** la pièce (7) de guidage de la broche présente des lèvres d'étanchement (18) en vue d'assurer l'étanchéité vis-à-vis de la broche (4) et/ou de l'orifice (2) de passage de ladite broche.

9. Agencement selon l'une des revendications précédentes,
**caractérisé par**
la présence d'une pièce moulée (13) en PTFE ceinturant la collerette (6) du chapeau (1) de vanne d'arrêt, qui fait saillie vers l'intérieur, et comblant l'espace interstitiel situé entre ladite collerette (6) et la broche (4).

10. Agencement selon l'une des revendications précédentes,
**caractérisé par le fait**
**qu'**un anneau de retenue (19), pénétrant dans la rainure pratiquée dans la broche (4), est placé au-dessus de la pièce (7) de guidage de ladite broche.
